# EUROPEAN PATENT APPLICATION

(11) **EP 4 821 748 A1**
(43) Date of publication of application: **14.10.2026**
(21) Application number: 26169483.0
(22) Date of filing: 31.03.2026
(51) Int. Cl.: B60L 53/30, A01D 75/00, A47L 9/00, A47L 11/40, A01D 101/00

(54) **CHARGING DEVICE**

(30) Priority: 11.04.2025 CN 202510463058
(71) Applicant: Shenzhen Mammotion Innovation Co., Limited, Shenzhen, Guangdong 518000 (CN)
(72) Inventor:
(74) Representative: Huang, Liwei

(57) **Abstract**

This disclosure provides a charging device. The charging device includes a chassis, a charging dock, and a repelling device. The chassis has a parking area for parking a self-moving device. The charging dock is disposed on the chassis. The charging dock is provided with at least one to-be-protected component. The repelling device surrounds at least part of a periphery of the chassis, or surrounds at least part of a peripheral side of the at least one to-be-protected component, so as to form a protection area at the peripheral side of the chassis or the peripheral side of the at least one to-be-protected component, such that a to-be-repelled subject changes a moving direction or stops moving in response to contacting the repelling device, thereby preventing the to-be-repelled subject from entering the protection area.

## Description

### Technical Field

This disclosure relates to the technical field of cleaning robots, and in particular to a charging device.

### Background Art

A charging device can charge outdoor self-moving devices such as lawn mowers, snow blowers, and cleaning robots operating in home yards, manors, hotels, and the like. In addition, the charging device can also charge electric automobiles, electric vehicles, and the like.

At present, charging devices generally lack protective designs against mollusk such as snails and slugs. Such creatures can easily climb onto a surface of a charging device and block signals of the charging device; mucus secreted by such mollusk may also corrode metal structures of the charging device and the like. Therefore, how to provide a charging device capable of effectively protecting signal transceiving components and key metal components on the charging device has become a technical problem to be solved.

### Summary

A main purpose of this disclosure is to provide a charging device, so as to solve the technical problem of how to improve a repelling function of the charging device.

To achieve the above purpose, embodiments of this disclosure provide a charging device, comprising:
a chassis having a parking area for parking a self-moving device;
a charging dock disposed on the chassis, the charging dock being provided with at least one to-be-protected component; and
a repelling device surrounding at least part of a peripheral side of the chassis, or surrounding at least part of a peripheral side of the at least one to-be-protected component, so as to form a protection area at the peripheral side of the chassis or the peripheral side of the at least one to-be-protected component, such that a to-be-repelled subject changes a moving direction or stops moving in response to contacting the repelling device.

The charging device provided in this disclosure includes a chassis and a charging dock. The chassis has a parking area for parking a self-moving device, and the charging dock is disposed on the chassis. The charging device further includes a repelling device. The repelling device surrounds at least part of a peripheral side of the chassis, or surrounds at least part of a peripheral side of the at least one to-be-protected component, so as to form a protection area at the peripheral side of the chassis or the peripheral side of the at least one to-be-protected component, such that a to-be-repelled subject changes a moving direction or stops moving in response to contacting the repelling device, thereby preventing the to-be-repelled subject from entering the protection area and further effectively protecting the charging dock and the self-moving device parked on the chassis. The arrangement also prevents a sensor module and a charging assembly on the charging dock from being blocked by the to-be-repelled subject or affected by mucus secreted by the to-be-repelled subject, and also prevents a sensing module and a charging module on the charging self-moving device from being blocked by the to-be-repelled subject or affected by mucus secreted by the to-be-repelled subject, so that the charging device has a good repelling function and self-protection function, thereby improving reliability of the charging device.

In an optional embodiment, the repelling device is disposed on the chassis; alternatively, the repelling device is disposed on at least part of an outer periphery of the chassis; or alternatively, the repelling device is disposed on the charging dock.

In an optional embodiment, the at least one to-be-protected component comprises a sensor module, and the repelling device surrounds at least part of a peripheral side of the sensor module.

In an optional embodiment, the sensor module is located on a side of the charging dock facing the parking area.

In an optional embodiment, the at least one to-be-protected component comprises a charging assembly, and the repelling device surrounds at least part of a peripheral side of the charging assembly.

In an optional embodiment, the charging assembly is located on a side of the charging dock facing the parking area.

In an optional embodiment, the repelling device is configured to generate a repelling current to repel the to-be-repelled subject.

In an optional embodiment, the repelling device comprises first electrodes and second electrodes. In response to the to-be-repelled subject simultaneously contacting the first electrode and the second electrode, a conductive circuit is formed between the first electrode and the second electrode and a repelling current is generated.

In an optional embodiment, the first electrode is electrically connected to a positive electrode of a power source, and the second electrode is electrically connected to a negative electrode of the power source.

In an optional embodiment, there are multiple first electrodes and multiple second electrodes, and the multiple first electrodes and the multiple second electrodes are alternately spaced apart.

In an optional embodiment, the first electrode and the second electrode are respectively electrically connected to two positive-electrode voltage output terminals of a power source, and a potential difference exists between the two positive-electrode voltage output terminals.

In an optional embodiment, the repelling device further comprises multiple third electrodes, the multiple third electrodes being located between the first electrode and the second electrode, the first electrode being located on a side away from the protection area, and the second electrode being located on a side close to the protection area.

In an optional embodiment, from the first electrode toward the second electrode, a potential difference between each two adjacent third electrodes increase sequentially.

In an optional embodiment, the first electrode is an annular electrode, and the second electrode is an annular electrode; alternatively, the first electrode is a planar spiral electrode, and the second electrode is a planar spiral electrode.

In an optional embodiment, there are multiple first electrodes and multiple second electrodes, the multiple first electrodes and the multiple second electrodes crisscrossing one another, the multiple first electrodes being sequentially spaced apart, and the multiple second electrodes being sequentially spaced apart.

In an optional embodiment, the multiple first electrodes comprise first positive electrodes and first negative electrodes arranged alternately, the multiple second electrodes comprise second positive electrodes and second negative electrodes arranged alternately, the first positive electrodes and the second negative electrodes being electrically isolated at intersections therebetween, and the first negative electrodes and the second positive electrodes being electrically isolated at intersections therebetween.

In an optional embodiment, the first positive electrodes and the second positive electrodes are electrically connected at intersections therebetween, and the first negative electrodes and the second negative electrodes are electrically connected at intersections therebetween.

In an optional embodiment, the multiple first electrodes comprise multiple third positive electrodes, the multiple second electrodes comprise multiple fourth positive electrodes, and intersections between the respective third positive electrodes and the respective fourth positive electrodes are electrically isolated.

In an optional embodiment, the second electrode protrudes relative to the first electrode.

In an optional embodiment, the second electrode is provided with multiple conductive portions distributed at intervals, the multiple conductive portions being electrically connected to the second electrode respectively and protruding relative to the first electrode.

In an optional embodiment, the repelling device comprises a conductive layer, two ends of the conductive layer being electrically connected to a positive electrode and a negative electrode of a power source, respectively, to apply electrical stimulation to the to-be-repelled subject in response to the to-be-repelled subject contacting the conductive layer.

In an optional embodiment, the repelling device comprises a galvanic cell electrode. In response to the to-be-repelled subject contacting the galvanic cell electrode, a current is generated through a galvanic cell effect to apply electrical stimulation to the to-be-repelled subject.

In an optional embodiment, the galvanic cell electrode comprises a copper layer.

In an optional embodiment, the repelling device further comprises a first power source, a positive electrode of the first power source being electrically connected to the first electrode, a negative electrode of the first power source being electrically connected to the second electrode, and the first electrode and the second electrode being electrically conducted through the to-be-repelled subject to generate a repelling current; alternatively,
the charging device comprises a second power source, a positive electrode of the second power source being electrically connected to the first electrode, a negative electrode of the second power source being electrically connected to the second electrode, and the first electrode and the second electrode being electrically conducted through the to-be-repelled subject to generate a repelling current.

In an optional embodiment, the repelling device comprises a spike structure, and the spike structure protrudes from at least part of a peripheral side of the chassis or protrudes from at least part of a peripheral side of the at least one to-be-protected component.

In an optional embodiment, the charging device further comprises a controller and a humidity sensor, the humidity sensor being electrically connected to the controller; the controller is at least configured to control the repelling device to be electrically connected to a power source in response to the humidity sensor detecting that humidity is greater than or equal to a humidity threshold; or
the controller is configured to control the repelling device to be electrically connected to a power source while the charging device charges the self-moving device.

### Brief Description of the Drawings

To describe the technical solutions in embodiments of this disclosure more clearly, the drawings required for describing the embodiments will be briefly introduced below.
FIG. 1 is a perspective schematic view of a charging device provided in an embodiment of this disclosure;
FIG. 2 is a perspective view of a charging device and a self-moving device during charging, provided in an embodiment of this disclosure;
FIG. 3 is a perspective view of a self-moving device provided in an embodiment of this disclosure;
FIG. 4 is a schematic view of a repelling device disposed on a chassis at a position close to an edge, provided in an embodiment of this disclosure;
FIG. 5 is a schematic view of a repelling device disposed around a peripheral side of a to-be-protected component of a charging dock, provided in an embodiment of this disclosure;
FIG. 6 is a structural schematic view of a first repelling device provided in an embodiment of this disclosure;
FIG. 7 is a structural schematic view of a second repelling device provided in an embodiment of this disclosure;
FIG. 8 is a structural schematic view of a third repelling device provided in an embodiment of this disclosure;
FIG. 9 is a structural schematic view of a fourth repelling device provided in an embodiment of this disclosure;
FIG. 10 is a structural schematic view of a fifth repelling device provided in an embodiment of this disclosure;
FIG. 11 is a structural schematic view of a sixth repelling device provided in an embodiment of this disclosure;
FIG. 12 is a structural schematic view of a seventh repelling device provided in an embodiment of this disclosure;
FIG. 13 is a structural schematic view of an eighth repelling device provided in an embodiment of this disclosure;
FIG. 14 is a structural schematic view of a ninth repelling device provided in an embodiment of this disclosure;
FIG. 15 is a structural schematic view of a tenth repelling device provided in an embodiment of this disclosure;
FIG. 16 is a structural schematic view of an eleventh repelling device provided in an embodiment of this disclosure;
FIG. 17 is a structural schematic view of a twelfth repelling device provided in an embodiment of this disclosure;
FIG. 18 is a structural schematic view of a thirteenth repelling device provided in an embodiment of this disclosure.

### Detailed Description of Embodiments

The technical solutions of this disclosure will be clearly and completely described below with reference to the drawings. Obviously, the described embodiments are merely some embodiments of this disclosure rather than all embodiments. All other embodiments obtained by a person of ordinary skill in the art based on the embodiments provided in this disclosure without creative efforts shall fall within the protection scope of this disclosure.

In this disclosure, the expression "embodiment" means that a particular feature, structure, or characteristic described in connection with an embodiment may be included in at least one embodiment of this disclosure. Occurrences of this phrase at various places in the specification do not necessarily refer to the same embodiment, nor do they refer to mutually exclusive, independent, or alternative embodiments relative to other embodiments. A person skilled in the art can explicitly and implicitly understand that the embodiments described in this disclosure may be combined with other embodiments.

The terms "first," "second," and the like in the specification and claims of this disclosure and in the accompanying drawings described above are used to distinguish different objects rather than to describe a particular order. In addition, the terms "comprising" and "having," and any variations thereof, are intended to cover a non-exclusive inclusion. For example, a component or device that includes one or more parts is not limited to the one or more parts listed, and may optionally further include one or more parts not listed but inherent to the illustrated product, or one or more parts that the component or device should have based on the described functions.

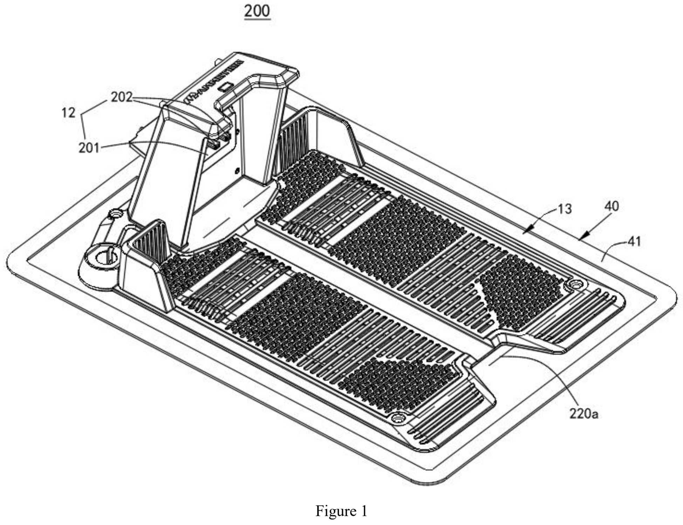

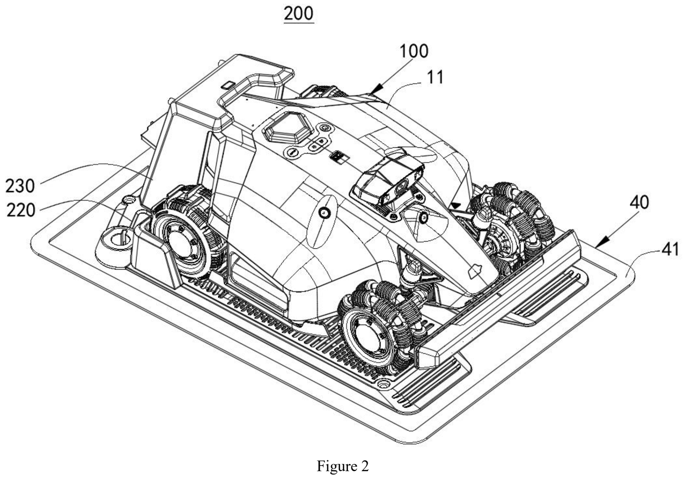

Referring to FIGS. 1 and 2, this disclosure provides a charging device 200. The charging device 200 configured to charge an outdoor self-moving device 100 operating in home yards, manors, hotels, and the like. The self-moving device 100 includes, but is not limited to, a lawn mower, a snow blower, and a cleaning robot,. In addition, the charging device can also charge electric automobiles, electric vehicles, and the like.

At present, the charging device 200 generally lacks protective designs against mollusk such as snails and slugs. Such creatures can easily climb onto a surface of the charging device 200 and block signals of the charging device 200; mucus secreted by such biological subjects may also corrode metal structures of the charging device 200 and the like.

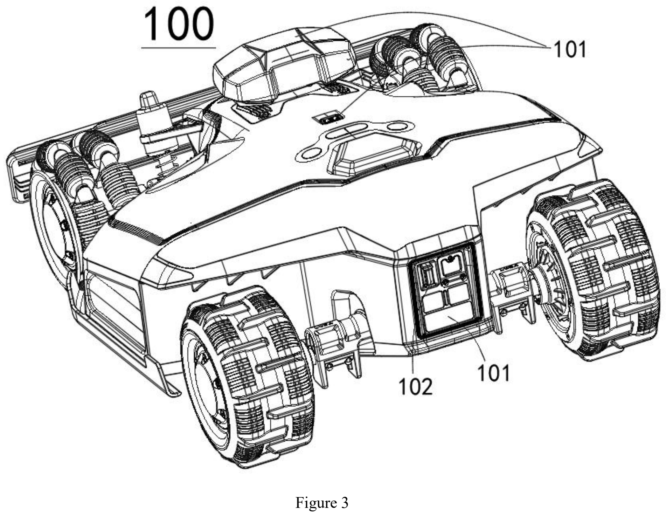

Referring to FIGS. 1 to 3, the charging device 200 includes an infrared module 201. The infrared module 201 is configured to detect whether a path of the self-moving device 100 is accurate during a return-to-dock process, and whether a charging module 102 of the self-moving device 100 is accurately docked with a charging assembly 202 on the charging device 200. If a snail climbs onto a housing of the charging device 200 and blocks key sensor modules such as the infrared module 201, such blockage leads to a decrease in device positioning accuracy and a reduction in environmental sensing capability, thereby affecting the return-to-dock process of the self-moving device 100.

Referring to FIG. 1, the charging device 200 further includes a charging assembly 202. The charging assembly 202 includes a second charging electrode plate. If a snail climbs to the second charging electrode plate, mucus produced by the snail may corrode the second charging electrode plate, thereby causing damage to the charging device 200 and the like.

When the self-moving device 100 is being charged at the charging device 200, such creatures can also easily climb onto a surface of the self-moving device 100, blocking signals during operation of the self-moving device 100, and mucus secreted by such biological subjects may corrode metal structures of the self-moving device 100 and the like.

In embodiments of this disclosure, the self-moving device 100 is exemplified as a lawn mower. A body housing of the lawn mower is provided with sensing modules such as a vision sensor and a lidar. If a snail climbs onto the body housing of the lawn mower and blocks key sensing modules such as the vision sensor or the lidar, such blockage will cause a decrease in device positioning accuracy and a reduction in environmental sensing capability, and in severe cases may cause failure of an obstacle avoidance function, thereby affecting normal operating performance and safety reliability of the lawn mower. If a snail climbs to a charging electrode plate of the lawn mower, mucus produced by the snail will corrode the charging electrode plate of the lawn mower, thereby obstructing the charging process of the lawn mower.

Current lawn mowers have not yet been equipped with an effective solution for preventing snails from climbing, which makes a vision module or a lidar likely to be blocked, and also makes a charging electrode plate of the lawn mower likely to be corroded, thereby affecting positioning and obstacle avoidance functions thereof and damaging the charging electrode plate of the lawn mower, which may result in a decrease in working efficiency and accuracy.

Based on the above problems, referring to FIG. 1, this disclosure provides a charging device 200. The charging device 200 includes a chassis 220, a charging dock 230, and at least one repelling device 40.

Referring to FIG. 1, the chassis 220 has a parking area 220a for parking the self-moving device 100. The charging dock 230 is disposed on the chassis 220 and is located outside the parking area 220a. Optionally, the charging dock 230 may be disposed at a front end, a rear end, a side edge, or the like of the chassis 220. A position of the charging dock 230 on the chassis 220 corresponds to a position of a first charging electrode plate of the charging module 102 on the self-moving device 100.

The charging dock 230 includes at least one to-be-protected component 12. The to-be-protected component 12 includes, but is not limited to, an infrared module 201 and/or the charging assembly 202.

Optionally, referring to FIG. 1, the repelling device 40 surrounds at least part of a periphery of the chassis 220, or the repelling device 40 surrounds at least part of a periphery of the to-be-protected component 12 of the charging dock 230, so as to form a protection area at the periphery of the chassis 220 or at the periphery of the to-be-protected component 12 of the charging dock 230, such that a to-be-repelled subject changes a moving direction or stops moving in response to contacting the repelling device 40. This embodiment can effectively protect the charging dock 230 as well as the self-moving device 100 parked in the parking area 220a.

At least part of the periphery of the chassis 220 includes at least one of a front side, a left side, a rear side, and a right side thereof.

At least part of the periphery of the to-be-protected component 12 includes at least one of a front side, a left side, a rear side, and a right side of the to-be-protected component 12.

Optionally, the repelling device 40 may be annular; or, the repelling device 40 may have an open shape such as a linear shape, an arc shape, a semi-annular shape, a polygonal line shape, a dot-matrix shape, or a line-array shape.

When the repelling device 40 is annular, the annular repelling device 40 surrounds the periphery of the chassis 220 or the to-be-protected component 12 of the charging dock 230.

When a single repelling device 40 is semi-annular, the semi-annular repelling device 40 is disposed at a front side, a left side, or a rear side of the chassis 220 or the charging dock 230, or is disposed on a crawling path of snails on the chassis 220 or the charging dock 230.

When two repelling devices 40 are semi-annular, the two semi-annular repelling devices 40 are combined to form an annular structure and are disposed around the periphery of the chassis 220 or the charging dock 230.

When multiple repelling devices 40 are arc-shaped, the multiple arc-shaped repelling devices 40 are combined to form an annular structure and are disposed around the periphery of the chassis 220 or the charging dock 230.

For convenience of description, the following embodiments are described by taking, as an example, an annular repelling device 40 disposed around the periphery of the chassis 220. It should be understood that embodiments in which the repelling device 40 has other open structure may refer to this embodiment.

Generally, sensor modules such as the infrared module 201 are exposed on the charging dock 230. If a snail climbs onto the sensor module such as the infrared module 201 of the charging dock 230, the snail will block signal transmission and reception of the sensor module such as the infrared module 201, leading to inaccurate signal acquisition and further causing positioning deviations during the return-to-dock process of the self-moving device 100. The charging assembly 202 on the charging dock 230 is exposed outside the charging dock 230. For example, a second charging electrode plate is exposed outside the charging dock 230. If a snail climbs onto the second charging electrode plate of the charging dock 230, mucus secreted by the snail will corrode the second charging electrode plate because the second charging electrode plate is made of metal, thereby causing corrosion of the second charging electrode plate and impairing a charging function of the charging dock 230.

Generally, a part of the sensing module 101 of the self-moving device 100 is exposed from a body housing of the self-moving device 100. For example, a vision sensor is exposed from the body housing to acquire images or light so as to position the self-moving device 100, detect obstacles If a snail climbs onto the vision sensor on the body housing, the snail will block transmission or reception of images or light by the vision sensor, and further resulting in inaccurate signal acquisition by the vision sensor and further causing problems such as inaccurate device positioning accuracy or disordered obstacle avoidance. In addition, a lidar is exposed from the body housing and positions the self-moving device 100 by transmitting and receiving radar signals and the like. If a snail climbs onto the lidar on the body housing, the snail will block radar signals, causing inaccurate signal acquisition by the lidar and further causing problems such as inaccurate device positioning accuracy. For example, a first charging electrode plate of a charging module 102 of the self-moving device 100 is exposed from the body housing and is configured to be docked with a charging interface on the charging dock 230, for example, the foregoing charging assembly 202, so as to charge the self-moving device 100. If a snail climbs onto the first charging electrode plate on the body housing, mucus secreted thereby will corrode the first charging electrode plate of the lawn mower because the first charging electrode plate is made of metal, thereby will corrode the charging electrode plate of the lawn mower and will affect charging efficiency of the self-moving device 100.

The charging device 200 provided in this disclosure includes a chassis 220 and a charging dock 230. The chassis 220 has a parking area 220a for parking a self-moving device 100, and the charging dock 230 is disposed on the chassis 220. The charging device 200 further includes a repelling device 40. surrounding at least part of a periphery of the chassis 220 or at least part of a periphery of the to-be-protected component 12 on the charging dock 230, so as to form a protection area at the periphery of the chassis 220 or the periphery of the to-be-protected component 12. Thus a to-be-repelled subject changes a moving direction or stops moving in response to contacting the repelling device 40, thereby preventing the to-be-repelled subject from entering the protection area 13. This arrangement effectively protecting the charging dock 230 and the self-moving device 100 parked on the chassis 220, preventing the to-be-protected component 12 on the charging dock 230 from being blocked by the to-be-repelled subject or affected by mucus secreted by the to-be-repelled subject, and also preventing a sensing module and a charging module on the charging self-moving device 100 from being blocked by the to-be-repelled subject or affected by mucus secreted by the to-be-repelled subject, so that the charging device 200 has a good repelling function and self-protection function, improving the reliability of the charging device 200.

The following embodiments specifically describe arrangement positions of the repelling device 40.

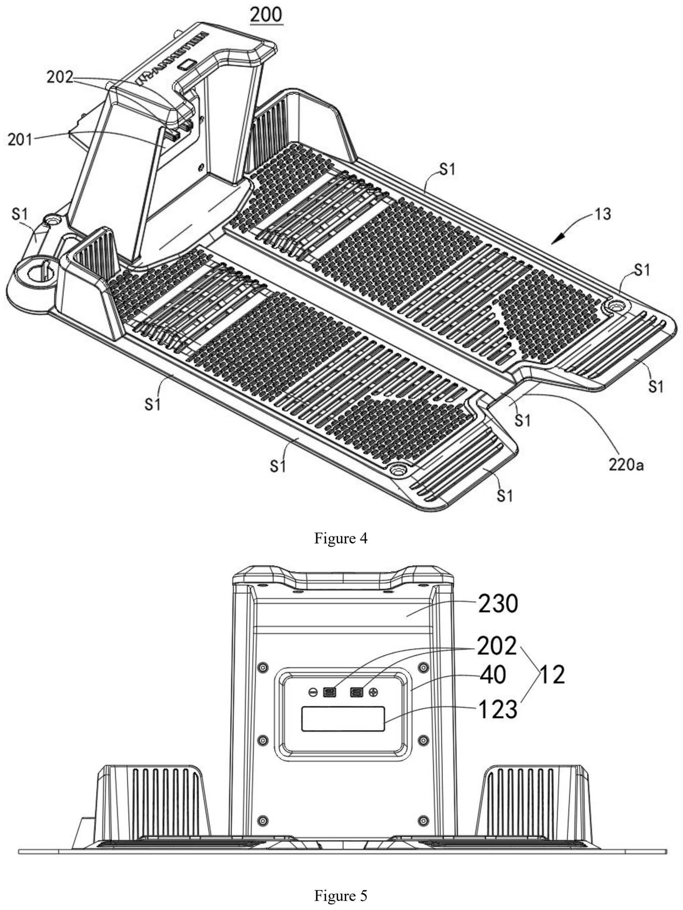

In a first optional embodiment regarding the position of the repelling device 40, referring to FIG. 4, the repelling device 40 is disposed on the chassis 220.

Optionally, the repelling device 40 is annular and is disposed at a position proximate to an edge of the chassis 220, for example, a position indicated by S1 in FIG. 4. The repelling device 40 encloses both the charging dock 230 and the parking area 220a of the chassis 220 within the protection area 13. In other words, the repelling device 40 is disposed around an outer periphery of the charging dock 230 and the parking area 220a of the chassis 220. In one embodiment, the number of repelling devices 40 is one, and one repelling device 40 is disposed around the outer periphery of the charging dock 230 and the parking area 220a of the chassis 220. In another embodiment, the number of repelling devices 40 is two, where one repelling device 40 being disposed around an outer periphery of the charging dock 230 and the other repelling device 40 being disposed around an outer periphery of the parking area 220a of the chassis 220.

In a second optional embodiment of a position of the repelling device 40, referring to FIG. 1, the repelling device 40 is disposed along at least part of an outer periphery of the chassis 220.

Optionally, the repelling device 40 is annular, is disposed outside the chassis 220, and surrounds the chassis 220. The repelling device 40 encloses both the charging dock 230 and the parking area 220a of the chassis 220 within the protection area 13. In other words, the repelling device 40 is disposed around an outer periphery of the charging dock 230 and the parking area 220a of the chassis 220.

In a third optional embodiment of a position of the repelling device 40, referring to FIG. 5, the repelling device 40 is disposed on the charging dock 230. Further, the repelling device 40 is disposed on the charging dock 230 and surrounds at least part of a periphery of the to-be-protected component 12. In FIG. 5, the to-be-protected component 12 is disposed on a boss. The repelling device 40 is disposed around an outer periphery of the boss; alternatively, is disposed on a top surface of the boss at a position close to an edge; or alternatively, one part of the repelling device 40 is disposed on the top surface of the boss at a position close to an edge and another part of the repelling device 40 is disposed around the outer peripheral wall of the boss.

The to-be-protected component 12 includes, but is not limited to, a sensor module 123, a charging assembly 202, and other components that are susceptible to interference or damage by mollusk such as snails and slugs.

The to-be-repelled subject includes, but is not limited to, small crawling creatures such as snails and slugs. Of course, the to-be-repelled subject may further include snakes, mice, and the like, so as to prevent such creatures from affecting operation of the sensor module 123 of the charging dock 230 or corroding metal components on the charging dock 230. The sensor module 123 includes, but is not limited to, the infrared module 201.

This disclosure does not specifically limit the structure or type of the repelling device 40. The number of components to be protected 12 may be one or more.

When the number of components to be protected 12 is one, the number of repelling devices 40 may be one. Where the repelling device 40 is disposed at least part of a periphery of the to-be-protected component 12 so as to form a protection area 13 at the periphery of the to-be-protected component 12 and repel a to-be-repelled subject that is about to enter the protection area 13. For example, the to-be-repelled subject stops moving or changes a moving direction in response to contacting the repelling device 40, thereby preventing the to-be-repelled subject from entering the protection area 13 and further preventing the to-be-protected component 12 from being blocked by the to-be-repelled subject or affected by mucus secreted by the to-be-repelled subject.

When the number of components to be protected 12 is one, the number of repelling devices 40 may also be plurality. The multiple repelling devices 40 may be arranged in an annular manner at a periphery of the to-be-protected component 12; alternatively, each repelling device 40 is disposed at the periphery of the to-be-protected component 12, and the multiple repelling devices 40 are distributed inwardly and outwardly at the periphery of the to-be-protected component 12, so as to form a protection area 13 at the periphery of the to-be-protected component 12 and repel a to-be-repelled subject that is about to enter the protection area 13. For example, the to-be-repelled subject stops moving or changes a moving direction in response to contacting the repelling device 40, thereby preventing the to-be-repelled subject from entering the protection area 13 and further preventing the to-be-protected component 12 from being blocked by the to-be-repelled subject or affected by mucus secreted by the to-be-repelled subject.

Referring to FIG. 5, when there are multiple components to be protected 12, the number of repelling devices 40 maybe one. One repelling device 40 is disposed around the periphery of the multiple components to be protected 12 so as to form a protection area 13 at the periphery of the multiple components to be protected 12 and repel a to-be-repelled subject that is about to enter the protection area 13. For example, the to-be-repelled subject stops moving or changes a moving direction in response to contacting the repelling device 40, thereby preventing the to-be-repelled subject from entering the protection area 13 and further preventing the components to be protected 12 from being blocked by the to-be-repelled subject or affected by mucus secreted by the to-be-repelled subject. For example, one repelling device 40 encloses one to-be-protected area 13, and the multiple components to be protected 12 are all located within the to-be-protected area 13.

When there are multiple components to be protected 12, the number of repelling devices 40 may also be a plurality. Optionally, the multiple repelling devices 40 together surround one protection area 13 containing all components to be protected 12. alternatively, the multiple repelling devices 40 surround to form multiple protection areas 13, and the multiple components to be protected 12 are respectively located within the multiple protection areas 13, so as to repel a to-be-repelled subject that is about to enter the multiple protection areas 13. For example, the to-be-repelled subject stops moving or changes a moving direction in response to contacting the repelling device 40, thereby preventing the to-be-repelled subject from entering the protection area 13 and further preventing the to-be-protected component 12 from being blocked by the to-be-repelled subject or affected by mucus secreted by the to-be-repelled subject.

The following embodiments specifically exemplify the structure of the to-be-protected component 12 and the corresponding position of the repelling device 40.

Referring to FIG. 5, the at least one to-be-protected component 12 includes a sensor module 123. The repelling device 40 surrounds at least part of a periphery of the sensor module 123. The sensor module 123 includes, but is not limited to, the infrared module 201.

In this embodiment, by disposing the repelling device 40 around at least part of the periphery of the sensor module 123, the sensor module 123 is located within the protection area 13, thereby preventing the to-be-repelled subject from entering the protection area 13 and further preventing the sensor module 123 from being blocked by the to-be-repelled subject or affected by mucus secreted by the to-be-repelled subject, which would otherwise cause problems such as inaccurate detection, thereby improving the accuracy and reliability of the charging device 200.

Referring to FIG. 5, the sensor module 123 is located on a side of the charging dock 230 facing the parking area 220a. Specifically:

When the sensor module 123 is located on the side of the charging dock 230 facing the parking area 220a. The sensor module 123 includes the infrared module 201 and the like. The repelling device 40 is correspondingly disposed around the side of the charging dock 230 facing the parking area 220a and surrounds a periphery of sensor modules such as the infrared module 201, so as to effectively protect the infrared module 201 and the like and prevent the infrared module 201 and the like from being blocked by the to-be-repelled subject or affected by mucus secreted by the to-be-repelled subject.

Referring to FIG. 5, the at least one to-be-protected component 12 includes a charging assembly 202, namely the foregoing charging assembly 202. The repelling device 40 surrounds at least part of a periphery of the charging assembly 202. The charging assembly 202 includes, but is not limited to, a charging interface, a charging electrode plate, or a charging terminal.

In this embodiment, by disposing the repelling device 40 around periphery of the charging assembly 202, such as a charging interface, a charging electrode plate, or a charging terminal, the charging assembly 202 such as the charging interface, the charging electrode plate, or the charging terminal is located within the protection area 13, thereby preventing the to-be-repelled subject from entering the protection area 13 and further preventing the charging assembly 202 such as the charging interface, the charging electrode plate, or the charging terminal from being blocked by the to-be-repelled subject or affected by mucus secreted by the to-be-repelled subject, which would otherwise cause problems such as low charging efficiency, an inability to charge, or a charging short circuit, thereby improving charging protection capability of the charging device 200.

Further optionally, referring to FIG. 5, the charging assembly 202 is located on a side of the charging dock 230 facing the parking area 220a. Specifically:

When the charging assembly 202, such as a charging interface, a charging electrode plate, or a charging terminal, is located on the side of the charging dock 230 facing the parking area 220a. The repelling device 40 is disposed around the side of the charging dock 230 facing the parking area 220a and surrounds periphery of the charging assembly 202 such as the charging interface, the charging electrode plate, or the charging terminal, so as to effectively protect the charging assembly 202 such as the charging interface, the charging electrode plate, or the charging terminal and prevent the charging assembly 202 such as the charging interface, the charging electrode plate, or the charging terminal from being blocked by the to-be-repelled subject or corroded by mucus secreted by the to-be-repelled subject, thereby improving charging protection capability of the charging device 200.

Optionally, the repelling device 40 is configured to generate a repelling current so as to repel the to-be-repelled subject.

In this embodiment, when the to-be-repelled subject, such as a snail, crawls into contact with the repelling device 40, a micro-current generated thereby the repelling device 40 is conducted to the body of the snail, causing the snail to receive a mild electric shock and feel discomfort, thereby changing a crawling direction and moving away from an area where the repelling device 40 is located, namely the protection area 13, thereby repelling the snail and preventing the to-be-protected component 12 in the protection area 13 from being blocked by the snail or affected by mucus secreted by the snail.

Optionally, the repelling current generated by the repelling device 40 is a micro-current. An intensity of the repelling current generated by the repelling device 40 is less than a first preset current intensity. The first preset current intensity is 2 mA. This disclosure does not specifically limit the intensity of the repelling current generated by the repelling device 40. Optionally, the current range of the repelling current may be at a milliampere level or a microampere level. The microcurrent does not pose a threat to the human body and does not inflict lethal harm on a snail, but merely causes the snail to feel discomfort. For example, the current intensity of the repelling current may be, but is not limited to, any one of 10 µA, 50 µA, 100 µA, 200 µA, 300 µA, 400 µA, 500 µA, 600 µA, 700 µA, 800 µA, 900 µA, and 1 mA, or a value between any two thereof.

The following embodiments exemplify specific structures of the repelling device 40. Of course, the repelling device 40 provided in this disclosure includes, but is not limited to, the following embodiments.

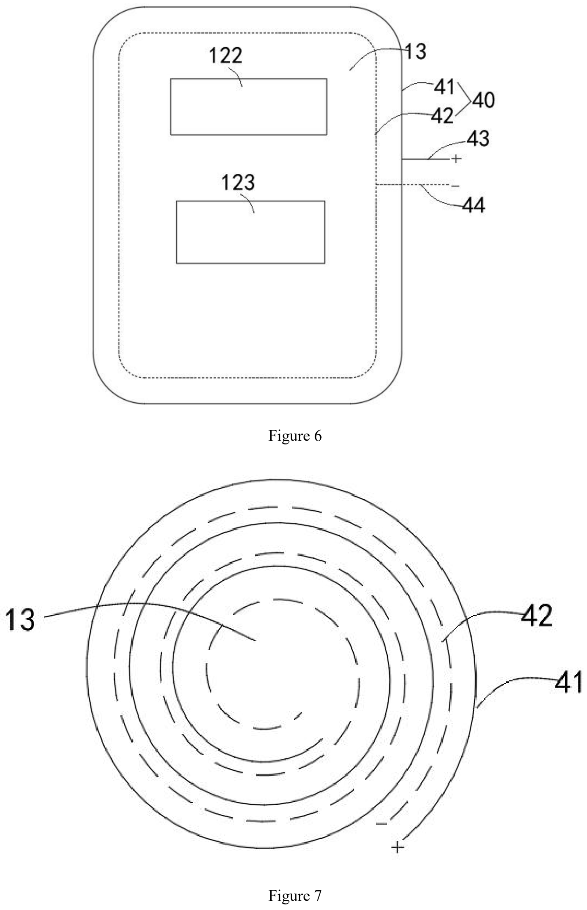

In a first optional embodiment of the repelling device 40, referring to FIG. 6, the repelling device 40 includes first electrodes 41 and second electrodes 42.

Optionally, arrangement manners of the first electrode 41 and the second electrode 42 include, but are not limited to, a parallel arrangement, a non-parallel and non-intersecting arrangement, and an intersecting yet electrically isolated arrangement. In this embodiment, a parallel arrangement between the first electrode 41 and the second electrode 42 is taken as an example. This embodiment does not specifically limit the extending directions of the first electrode 41 and the second electrode 42.

In response to the to-be-repelled subject simultaneously contacting the first electrode 41 and the second electrode 42, a conductive circuit is formed through the first electrode 41, the to-be-repelled subject, and the second electrode 42, thereby generating a repelling current is generated. The repelling current is a microcurrent. The microcurrent is conducted to the body of the snail, causing the snail to receive a mild electric shock and feel discomfort, prompting it to change its crawling direction and moving away from the area where the repelling device 40 is located, namely the protection area 13, thereby repelling the snail and preventing the to-be-protected component 12 in the protection area 13 from being blocked by the snail or affected by mucus secreted by the snail.

Further optionally, the first electrode 41 is electrically connected to a positive electrode of a power source. The second electrode 42 is electrically connected to a negative electrode of the power source.

The power source includes, but is not limited to, a power source of the charging device 200, a micro power source formed based on a voltage provided by the power source of the charging device 200, or a dedicated repelling power source of the repelling device 40 itself. Specific examples of the power source will be described later.

In this embodiment, the first electrode 41 is a positive electrode, and the second electrode 42 is a negative electrode. In an initial state, the first electrode 41 and the second electrode 42 are in an open-circuit state. In response to the to-be-repelled subject simultaneously contacting the first electrode 41 and the second electrode 42, the first electrode 41 and the second electrode 42 are electrically conducted. A preset potential difference exists between the first electrode 41 and the second electrode 42. In response to the to-be-repelled subject simultaneously contacting the first electrode 41 and the second electrode 42, a conductive circuit is formed among the first electrode 41, the to-be-repelled subject, and the second electrode 42, and a repelling current is generated, causing the to-be-repelled subject to receive a mild electric shock and feel discomfort, thereby changing a crawling direction and moving away from the area where the repelling device 40 is located, namely the protection area 13.

Optionally, a spacing between the first electrode 41 and the second electrode 42 is greater than or equal to a first preset spacing and less than or equal to a second preset spacing.

For example, the first preset spacing is 0.1 cm, and the second preset spacing is 1 cm. If the spacing between the first electrode 41 and the second electrode 42 is excessively large, some small snails may be unable to simultaneously contact the first electrode 41 and the second electrode 42, and thus a conductive circuit cannot be formed between the first electrode 41 and the second electrode 42. As a result, some small snails passing the repelling device 40 will not cause a repelling current to be generated, so that the repelling device 40 cannot prevent some small snails from blocking the to-be-protected component 12 or affecting the to-be-protected component 12 through secreted mucus.

If the spacing between the first electrode 41 and the second electrode 42 is excessively small, the first electrode 41 and the second electrode 42 may be easily directly conducted, thereby causing a short circuit.

Specifically, the first preset spacing is 0.1 cm, and the second preset spacing is 0.5 cm. Generally, a width of a snail is approximately 0.6 cm. By setting the spacing between the first electrode 41 and the second electrode 42 to be greater than or equal to 0.1 cm and less than or equal to 0.5 cm ensures that even if the snail crawls along a gap between the first electrode 41 and the second electrode 42, the snail can simultaneously contact the first electrode 41 and the second electrode 42, thereby preventing the snail from crawling along the gap between the first electrode 41 and the second electrode 42, allowing the snail to be driven away from the repelling device 40 at an earlier stage, further reducing a probability that the snail enters the protection area 13, and improving the repelling efficiency.

The following embodiments exemplify the geometric shapes of the first electrode 41 and the second electrode 42.

In a first optional embodiment regarding electrode shapes, referring to FIG. 6, the first electrode 41 is an annular electrode. The second electrode 42 is an annular electrode.

Where the first electrode 41 being annular and the second electrode 42 are annular, the first electrode 41 is disposed around the periphery of the to-be-protected component 12, in accordance with the aforementioned arrangement of the repelling device 40.

Referring to FIG. 6, the repelling device 40 further includes a first extension electrode 43. One end of the first extension electrode 43 is electrically connected to the first electrode 41, and the other end of the first extension electrode 43 is electrically connected to a positive electrode of a power source. For example, the positive electrode of the power source is located inside the charging dock 230, the first electrode 41 is disposed on an outer surface of the charging dock 230, one end of the first extension electrode 43 contacts the outer surface of the charging dock 230, and the other end penetrates the charging dock 230 and extends to a position of the positive electrode of the power source.

The first electrode 41 includes, but is not limited to, a metal trace. The first extension electrode 43 includes, but is not limited to, a wire having a protective sheath.

The second electrode 42 is also disposed around the periphery of the to-be-protected component 12, which may specifically refer to the foregoing position design of the repelling device 40. In one embodiment, the second electrode 42 is located between the first electrode 41 and the to-be-protected component 12. In other embodiments, the first electrode 41 is located between the second electrode 42 and the to-be-protected component 12.

Referring to FIG. 6, the repelling device 40 further includes a second extension electrode 44. One end of the second extension electrode 44 is electrically connected to the second electrode 42, and the other end of the second extension electrode 44 is electrically connected to a negative electrode of a power source. For example, while the negative electrode of the power source is located inside the charging dock 230, the second electrode 42 is disposed on an outer surface of the charging dock 230, one end of the second extension electrode 44 contacts the outer surface of the charging dock 230, and the other end penetrates the charging dock 230 and extends to a position of the negative electrode of the power source.

The second electrode 42 includes, but is not limited to, a metal trace. The second extension electrode 44 includes, but is not limited to, a wire having a protective sheath.

In a second optional embodiment regarding electrode shapes, referring to FIG. 7, the first electrode 41 is a planar spiral electrode. The first electrode 41 is a first planar spiral electrode. One end of the first planar spiral electrode is electrically connected to a positive electrode of a power source. The first planar spiral electrode surrounds a periphery of the to-be-protected component 12 in a planar spiral manner, and the other end of the first planar spiral electrode is an open-circuit end.

The second electrode 42 is a planar spiral electrode. The second electrode 42 is a second planar spiral electrode. One end of the second planar spiral electrode is electrically connected to a negative electrode of a power source. The second planar spiral electrode surrounds the periphery of the to-be-protected component 12 in a planar spiral manner, and the other end of the second planar spiral electrode is an open-circuit end.

This disclosure does not specifically limit the number of turns of the first planar spiral electrode or the second planar spiral electrode. Optionally, the first planar spiral electrode may have one turn, the second planar spiral electrode may have one turn, and the first planar spiral electrode and the second planar spiral electrode are interspaced, so that a potential difference and one electrical-stimulation barrier are formed between the first planar spiral electrode and the second planar spiral electrode. Further optionally, the first planar spiral electrode may have two turns, and the second planar spiral electrode may have one turn. A first turn of the first planar spiral electrode, the second planar spiral electrode, and a second turn of the first planar spiral electrode are sequentially arranged at intervals. A potential difference and a first electrical-stimulation barrier are formed between the first turn of the first planar spiral electrode and the second planar spiral electrode, and a potential difference and a second electrical-stimulation barrier are formed between the second planar spiral electrode and the second turn of the first planar spiral electrode.

In this embodiment, compared with the first optional annular electrode shape, additional provision of the first extension electrode 43 and the second extension electrode 44 is eliminated, while multiple-turn positive electrodes and multiple-turn negative electrodes can still be alternately arranged at intervals in sequence to form multiple electrical-stimulation barriers.

This disclosure does not specifically limit the respective number of the first electrodes 41 or the number of the second electrodes 42.

Optionally, there is one first electrodes 41and one second electrodes 42.

Taking the first electrode 41 being annular and the second electrode 42 being annular as an example, the first electrode 41 is disposed around the periphery of the to-be-protected component 12, which may specifically refer to the foregoing position design of the repelling device 40. The second electrode 42 is also disposed around the periphery of the to-be-protected component 12, which may specifically refer to the foregoing position design of the repelling device 40.

In one embodiment, the second electrode 42 is located between the first electrode 41 and the to-be-protected component 12. In an alternative embodiment, the first electrode 41 is located between the second electrode 42 and the to-be-protected component 12. A potential difference is maintained between the first electrode 41 and the second electrode 42, thereby forming a first electrical-stimulation barrier.

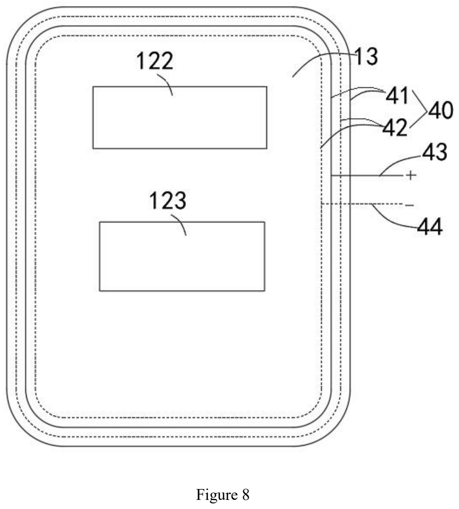

Further optionally, referring to FIG. 8, there are multiple first electrodes 41 and multiple second electrodes 42. The number of first electrodes 41 is more than one, and the number of second electrodes 42 is more than one. The multiple first electrodes 41 and the multiple second electrodes 42 are alternately arranged at intervals. For example, the first electrode 41, the second electrode 42, the first electrode 41, the second electrode 42, the first electrode 41, and the second electrode 42 are alternately arranged in sequence.

Taking the first electrodes 41 being annular and the second electrodes 42 being annular as an example, the multiple first electrodes 41 are annular electrodes having different radial dimensions. The multiple second electrodes 42 are annular electrodes having radial dimensions. The first electrode 41, the second electrode 42, the first electrode 41, and the second electrode 42 are alternately arranged in sequence. In this way, a potential difference is formed between every two adjacent electrodes, so as to form one electrical-stimulation barrier outside the protection area 13. In this embodiment, multiple electrical-stimulation barriers can be formed outside the protection area 13, thereby preventing the to-be-repelled subject from directly entering the protection area 13 after passing a first electrical-stimulation barrier, so that even if the to-be-repelled subject passes the first electrical-stimulation barrier and continues moving toward the protection area 13, the to-be-repelled subject will encounter a next electrical-stimulation barrier, thereby causing the to-be-repelled subject to move in a direction away from the protection area 13 and improving the repelling efficiency .

In other embodiments, the multiple first electrodes 41 and the multiple second electrodes 42 may also be arranged in a non-alternating pattern such as: first electrode 41, second electrode 42, second electrode 42, first electrode 41, first electrode 41, and the like. In some cases, the to-be-repelled subject may fail to contact the first electrode 41 or the second electrode 42 because a gap exists between the to-be-repelled subject and a surface of the charging dock 230, thereby causing the first electrode 41 and the second electrode 42 to fail to be conducted and preventing generation of a repelling current. In this embodiment, by disposing two or more first electrodes 41 and two or more second electrodes 42 in an alternately sequential arrangement, even when a gap exists between the to-be-repelled subject and the surface of the charging dock 230, a probability that the to-be-repelled subject contacts the first electrode 41 or the second electrode 42 can be increased, thereby increasing a probability that a repelling current is generated when the to-be-repelled subject is encountered and also increasing an interception rate for the to-be-repelled subject.

Optionally, referring to FIG. 8, the multiple first electrodes 41 have a same voltage, and the multiple second electrodes 42 have a same voltage. That is, the multiple first electrodes 41 are all electrically connected to a positive electrode of a power source, while the multiple second electrodes 42 are all electrically connected to a negative electrode of the power source.

Further optionally, referring to FIG. 8, the repelling device 40 further includes a first extension electrode 43. The first extension electrode 43 crosses the multiple first electrodes 41 and is electrically conductive therewith, and crosses the multiple second electrodes 42 and is electrically insulated therefrom. One part of the first extension electrode 43 is electrically connected to the multiple first electrodes 41, and another part of the first extension electrode 43 is electrically connected to a positive electrode of a power source. For example, the positive electrode of the power source is located inside the charging dock 230, the first electrodes 41 are disposed on an outer surface of the charging dock 230, one part of the first extension electrode 43 contacts the outer surface of the charging dock 230, the first electrodes 41 include, but are not limited to, metal traces, and one part of the first extension electrode 43 is a metal trace. Another part of the first extension electrode 43 enters the charging dock 230 and extends to a position of the positive electrode of the power source. Another part of the first extension electrode 43 includes, but is not limited to, a wire having a protective sheath.

In this embodiment, the multiple first electrodes 41 can be electrically connected to the positive electrode of the power source through a common first extension electrode 43. Compared with a manner in which each first electrode 41 is electrically connected to the positive electrode of the power source through one electrical connection trace, the number of electrical connection traces can be reduced and layout of the electrical connection traces can be optimized.

Further optionally, referring to FIG. 8, the repelling device 40 further includes a second extension electrode 44. The second extension electrode 44 crosses the multiple second electrodes 42 and is electrically conductive therewith, and crosses the multiple first electrodes 41 and is electrically insulated therefrom. One part of the second extension electrode 44 is electrically connected to the multiple second electrodes 42, and another part of the second extension electrode 44 is electrically connected to a negative electrode of a power source. For example, the negative electrode of the power source is located inside the charging dock 230, the second electrodes 42 are disposed on an outer surface of the charging dock 230, one part of the second extension electrode 44 contacts the outer surface of the charging dock 230, the second electrodes 42 include, but are not limited to, metal traces, and one part of the second extension electrode 44 is a metal trace. Another part of the second extension electrode 44 enters the charging dock 230 and extends to a position of the negative electrode of the power source. Another part of the second extension electrode 44 includes, but is not limited to, a wire having a protective sheath.

In this embodiment, the multiple second electrodes 42 can be electrically connected to the negative electrode of the power source through a common second extension electrode 44. Compared with a manner in which each second electrode 42 is electrically connected to the negative electrode of the power source through one electrical connection trace, the number of electrical connection traces can be reduced and layout of the electrical connection traces can be optimized.

In other embodiments, voltages of the multiple first electrodes 41 may be different, and the multiple first electrodes 41 may be respectively electrically connected to different positive-electrode output ports of a power source so as to load different positive voltages. The multiple second electrodes 42 are all electrically connected to a negative electrode of the power source. The first electrodes 41 and the second electrodes 42 are alternately arranged to form electrical-stimulation barriers having different potential differences. For example, a first voltage difference is formed between first electrodes 41 and a first second electrode 42, and a second voltage difference is formed between the first second electrode 42 and a second first electrode 41, wherein the second voltage may be greater than the first voltage. In this way, even if some relatively large to-be-repelled subjects pass through a first electrical-stimulation barrier corresponding to the first voltage, if the subjects continue moving toward the protection area 13, the subjects will be subjected to a second electrical-stimulation barrier corresponding to a greater voltage, namely the second voltage, and so on, until the relatively large to-be-repelled subjects change direction under electrical stimulation and move away from the protection area 13. The design of the repelling device 40 in this embodiment can not only repel relatively small subjects, but can also repel relatively large subjects, thereby increasing an interception rate for the to-be-repelled subject and improving a protection rate for the to-be-protected component.

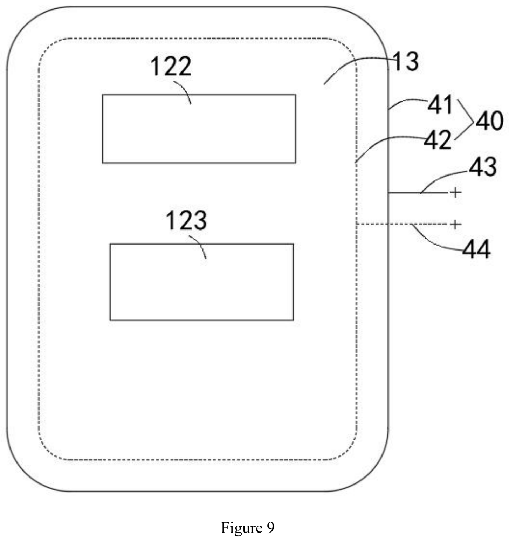

In a second optional embodiment of the repelling device 40, this embodiment is substantially the same as the first optional embodiment. A main difference between this embodiment and the first optional embodiment is that, referring to FIG. 9, the first electrode 41 and the second electrode 42 are respectively electrically connected to two positive-electrode voltage output terminals of a power source. A potential difference is maintained between the two positive-electrode voltage output terminals.

For example, the two positive-electrode voltage output terminals of the power source respectively include a first voltage output terminal and a second voltage output terminal. The first voltage output terminal outputs a first voltage, and the second voltage output terminal outputs a second voltage. The first electrode 41 is electrically connected to the first voltage output terminal so as to load the first voltage. The second electrode 42 is electrically connected to the second voltage output terminal so as to load the second voltage. The first voltage is different from the second voltage, that is, a voltage difference exists between the first electrode 41 and the second electrode 42. In an initial state, the first electrode 41 and the second electrode 42 are in an open-circuit state. In response to the to-be-repelled subject simultaneously contacting the first electrode 41 and the second electrode 42, the first electrode 41 and the second electrode 42 are electrically conducted. Because a voltage difference exists between the first electrode 41 and the second electrode 42, a conductive circuit is formed among the first electrode 41, the to-be-repelled subject, and the second electrode 42, and a repelling current is generated, causing the to-be-repelled subject to receive a mild electric shock and feel discomfort, thereby changing a crawling direction and moving away from the area where the repelling device 40 is located, namely the protection area 13.

Given that the repelling current in this embodiment is relatively small, for example, the repelling current is approximately several hundred microamperes, a voltage difference between the first electrode 41 and the second electrode 42 is also relatively small. In this embodiment, by forming the first electrode 41 and the second electrode 42 as two electrodes having a relatively small voltage difference, a slight voltage difference can be formed so as to further form a slight repelling current.

The geometric shape of the first electrode 41 and an electrical connection manner between the first electrode 41 and the first voltage output terminal of the power source may refer to the shape of the first electrode 41 and an electrical connection manner between the first electrode 41 and the positive electrode of the power source in the first embodiment.

The geometric shape of the second electrode 42 and an electrical connection manner between the second electrode 42 and the second voltage output terminal of the power source may refer to the shape of the second electrode 42 and an electrical connection manner between the second electrode 42 and the corresponding voltage output terminal of the power source in the first embodiment.

The number of the first electrodes 41 may be one or more, and the number of the second electrodes 42 may be one or more. When there are multiple first electrodes 41 and multiple second electrodes 42, the first electrodes 41 and the second electrodes 42 may be alternately arranged in an interleaved sequence.

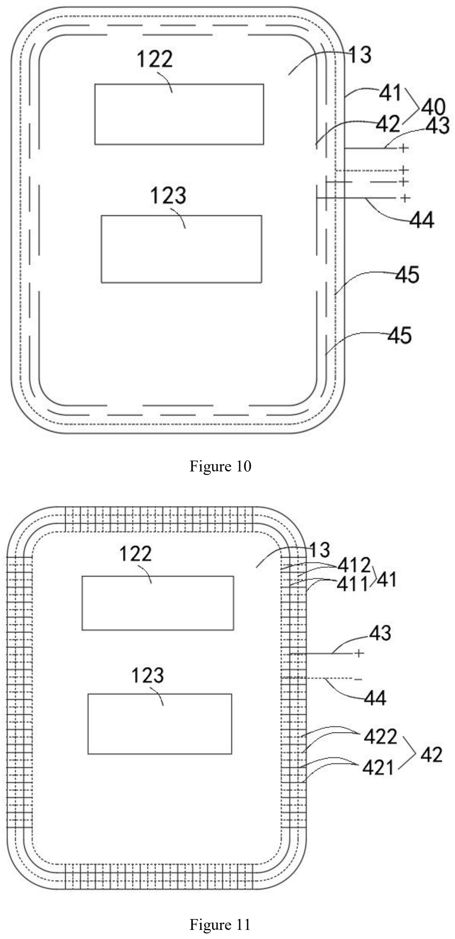

In a third optional embodiment of the repelling device 40, this embodiment is substantially the same as the second optional embodiment. A difference from the second optional embodiment is that, in this embodiment, referring to FIG. 10, the repelling device 40 further includes multiple third electrodes 45. The multiple third electrodes 45 are located between the first electrode 41 and the second electrode 42.

Further, a first potential difference is formed between the third electrode 45 and the first electrode 41. A second potential difference is formed between the third electrode 45 and the second electrode 42. Critically, the first potential difference is different from the second potential difference.

Specifically, three positive-electrode voltage output terminals of the power source respectively include a first voltage output terminal, a second voltage output terminal, and a third voltage output terminal. The first voltage output terminal outputs a first voltage, the second voltage output terminal outputs a second voltage, and the third voltage output terminal outputs a third voltage.

Consequently, the first electrode 41 is electrically connected to the first voltage output terminal so as to load the first voltage. The second electrode 42 is electrically connected to the second voltage output terminal so as to load the second voltage. The third electrode 45 is electrically connected to the third voltage output terminal so as to load the third voltage.

The first voltage is different from the third voltage, that is, a first potential difference exists between the first electrode 41 and the third electrode 45.

The third voltage is different from the second voltage, that is, a second potential difference exists between the third electrode 45 and the second electrode 42.

In an initial state, the first electrode 41 and the third electrode 45 are in an open-circuit state. In response to the to-be-repelled subject simultaneously contacting the first electrode 41 and the third electrode 45, the first electrode 41 and the third electrode 45 are electrically conducted. Because a first potential difference exists between the first electrode 41 and the third electrode 45, a conductive circuit is formed among the first electrode 41, the to-be-repelled subject, and the third electrode 45, and a first repelling current is generated, causing the to-be-repelled subject to receive a mild electric shock and feel discomfort, thereby changing a crawling direction and moving away from the area where the repelling device 40 is located, namely the protection area 13.

Further, the second potential difference may be configured to be greater than the first potential difference. In this way, a repelling current generated when the third electrode 45 and the second electrode 42 are conducted is greater than a repelling current generated when the first electrode 41 and the third electrode 45 are conducted, thereby further electrically stimulating the to-be-repelled subject and causing the to-be-repelled subject to move away from the protection area 13; alternatively, the arrangement can further electrically stimulate a relatively large to-be-repelled subject and cause the relatively large to-be-repelled subject to move away from the protection area 13.

The first electrode 41 is located on the side distal to (away from) the to-be-protected component 12. The second electrode 42 is located on a side close to the to-be-protected component 12. If the to-be-repelled subject crosses a first electrical-stimulation barrier between the first electrode 41 and the third electrode 45, the third electrode 45 and the second electrode 42 are in an open-circuit state in the initial state. In response to the to-be-repelled subject simultaneously contacting the third electrode 45 and the second electrode 42, the third electrode 45 and the second electrode 42 are electrically conducted. Because a second potential difference exists between the third electrode 45 and the second electrode 42, a conductive circuit is formed among the third electrode 45, the to-be-repelled subject, and the second electrode 42, and a second repelling current is generated. The second repelling current is greater than the first repelling current, so that the to-be-repelled subject receives further electrical stimulation and feels discomfort, thereby changing a crawling direction and moving away from the area where the repelling device 40 is located, namely the protection area 13.

Further optionally, from the first electrode 41 toward the second electrode 42, a potential difference between each two adjacent third electrodes 45 increase progressively. Consequently, from the first electrode 41 toward the second electrode 42, an intensity of a repelling current corresponding to the electrical-stimulation barrier formed between each two adjacent third electrodes 45 increases gradually.

On one hand, as the to-be-repelled subject crawls closer to the protection area 13, required electrical stimulation gradually increases, thereby facilitating driving some relatively large to-be-repelled subjects to crawl in a direction away from the protection area 13. On the other hand, some relatively large to-be-repelled subjects can simultaneously contact the first electrode 41 and multiple third electrodes 45, thereby receiving cumulative repelling currents from multiple electrical-stimulation barriers, thereby further stimulating the relatively large to-be-repelled subjects to crawl in a direction away from the protection area 13.

In a fourth optional embodiment of the repelling device 40, referring to FIG. 11, there are multiple first electrodes 41 and multiple second electrodes 42. The number of the first electrodes 41 is more than one, and the number of the second electrodes 42 is more than one. The multiple first electrodes 41 are sequentially arranged at intervals. The multiple second electrodes 42 are sequentially arranged at intervals. The first electrodes 41 extends in a first direction, and two adjacent first electrodes 41 may be arranged in parallel or may be non-parallel and non-intersecting. The second electrodes 42 extends in a second direction, and two adjacent second electrodes 42 may be arranged in parallel or may be non-parallel and non-intersecting. Notably, the first direction intersects the second direction.

The multiple first electrodes 41 and the multiple second electrodes 42 interweave or crisscross one another to form a grid-like repelling device 40. The grid-like repelling device 40 maximizes the probability that a to-be-repelled subject coming from different crawling directions simultaneously contacts two electrodes having a potential difference, thereby generating a repelling current and repelling subject to be repelled coming from different crawling directions.

Optionally, referring to FIG. 11, the multiple first electrodes 41 include first positive electrodes 411 and first negative electrodes 412 arranged alternately. Optionally, the first positive electrodes 411 extend along the first direction, and the first negative electrodes 412 extend along the first direction. The multiple first positive electrodes 411 and the multiple first negative electrodes 412 are sequentially interleaved.

Referring to FIG. 11, the multiple second electrodes 42 include second positive electrodes 421 and second negative electrodes 422 arranged alternately. Optionally, the second positive electrodes 421 extend along the second direction, and the second negative electrodes 422 extend along the second direction. The multiple second positive electrodes 421 and the multiple second negative electrodes 422 are alternately arranged in sequence.

Further, the first positive electrodes 411 and the second negative electrodes 422 are electrically isolated at intersections therebetween. That is, the first positive electrodes 411 and the second negative electrodes 422 are electrically insulated at intersections therebetween. Further, the first positive electrodes 411 and the second negative electrodes 422 are insulated and connected at the intersections through a first insulating portion.

The first negative electrodes 412 and the second positive electrodes 421 are electrically isolated at intersections therebetween. That is, the first negative electrodes 412 and the second positive electrodes 421 are electrically insulated at intersections therebetween. Further, the first negative electrodes 412 and the second positive electrodes 421 are insulated and connected at the intersections through a second insulating portion.

For example, the first positive electrodes 411 are annular and surround periphery of the to-be-protected component 12, and the first negative electrodes 412 are also annular and surround periphery of the to-be-protected component 12. A first instance of the first positive electrode 411, a first instance of the first negative electrode 412, a second first positive electrode 411, and a second first negative electrode 412 are sequentially distributed from outside to inside.

A potential difference is maintained between the first positive electrodes 411 and the first negative electrodes 412. In an initial state, the first positive electrodes 411 and the first negative electrodes 412 are in an open-circuit state. In response to the to-be-repelled subject simultaneously contacting the first positive electrodes 411 and the first negative electrodes 412, the first positive electrodes 411 and the first negative electrodes 412 are electrically conducted. Because a voltage difference exists between the first positive electrodes 411 and the first negative electrodes 412, a conductive circuit is formed among the first positive electrodes 411, the to-be-repelled subject, and the first negative electrodes 412, and a repelling current is generated, causing the to-be-repelled subject to receive a mild electric shock and feel discomfort, thereby changing a crawling direction and moving away from the area where the repelling device 40 is located, namely the protection area 13.

The first positive electrodes 411 in this embodiment may refer to the first electrode 41 in the first embodiment, and the first negative electrodes 412 in this embodiment may refer to the second electrode 42 in the first embodiment.

In a further optional embodiment, referring to FIG. 11, the second positive electrodes 421 extend along a radial direction of the annulus, and the second negative electrodes 422 extend along the radial direction of the annular layout. In other embodiments, the second positive electrodes 421 may also extend along another direction intersecting the first negative electrodes 412.

Each second positive electrode 421 intersects multiple first positive electrodes 411 and multiple first negative electrodes 412. Crucially, each first positive electrode 411 and the second positive electrode 421 are electrically connected at an intersection therebetween. In this way, the first positive electrodes 411 and the second positive electrodes 421 are loaded with a same positive voltage, and the multiple first positive electrodes 411 and the multiple second positive electrodes 421 may be electrically connected to a positive electrode of a power source through a common electrical connection trace. The second positive electrodes 421 and the first negative electrodes 412 are electrically insulated at intersections therebetween, thereby avoiding a short circuit.

Each second negative electrode 422 intersects multiple first negative electrodes 412 and multiple first positive electrodes 411. Further, the second negative electrodes 422 and the first negative electrodes 412 are electrically connected at intersections therebetween. In this way, the multiple first negative electrodes 412 and the multiple second negative electrodes 422 may be electrically connected to a negative electrode of a power source through a same electrical connection trace. The second negative electrodes 422 and the first positive electrodes 411 are electrically insulated at intersections therebetween, thereby avoiding a short circuit.

When the to-be-repelled subject crawls toward the protection area 13 along the annular radial direction or a direction intersecting the annular radial direction, the to-be-repelled subject will unavoidably contact a positive electrode and a negative electrode, thereby generating a repelling current, so that the to-be-repelled subject changes a crawling direction under electrical stimulation of the repelling current until crawling toward a region outside the repelling device 40, thereby effectively preventing to-be-repelled subjects coming from different directions from entering the protection area 13.

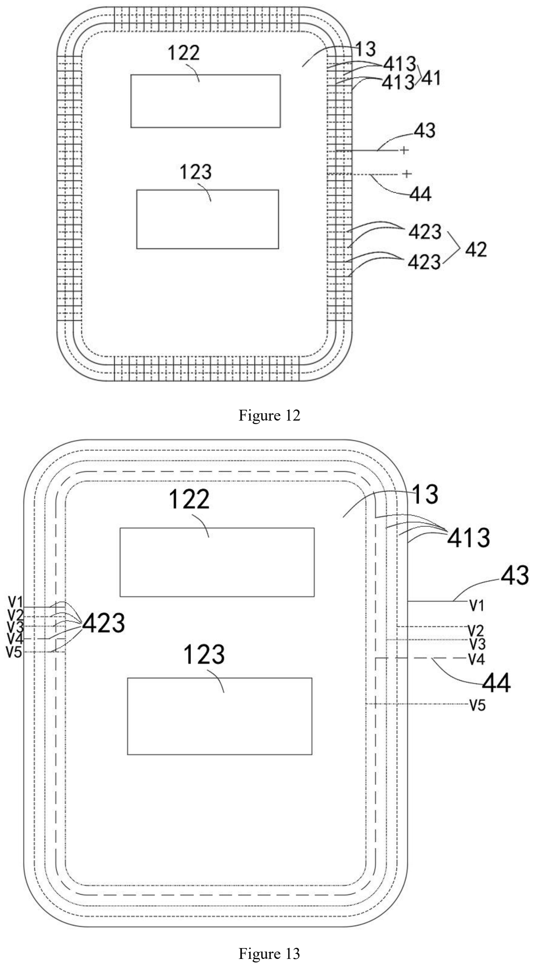

In a fifth optional embodiment of the repelling device 40, this embodiment is similar to the fourth optional embodiment. A difference lies in that, referring to FIG. 12, in this embodiment, the multiple first electrodes 41 include multiple third positive electrodes 413, and the multiple second electrodes 42 include multiple fourth positive electrodes 423. Intersections between the respective third positive electrodes 413 and the respective fourth positive electrodes 423 are electrically isolated.

In one optional embodiment, the multiple third positive electrodes 413 are loaded with a same voltage. The multiple fourth positive electrodes 423 are loaded with a same voltage, and the voltage loaded on the third positive electrodes 413 is different from the voltage loaded on the fourth positive electrodes 423. In this way, an intersecting grid-shaped electrode protection network having a potential difference is formed.

In another optional embodiment, the multiple third positive electrodes 413 are loaded with different voltages.

For example, in a direction gradually approaching the to-be-protected component 12, a potential difference between two adjacent third positive electrodes 413 increases progressively. Further by way of example, the third positive electrodes 413 are annular. The multiple third positive electrodes 413 sequentially surround periphery of the to-be-protected component 12.

In this embodiment, in the direction gradually approaching the to-be-protected component 12, an intensity of a repelling current corresponding to the electrical-stimulation barrier formed between two adjacent third positive electrodes 413 gradually increases.

On one hand, as the to-be-repelled subject crawls closer to the protection area 13, required electrical stimulation gradually increases, thereby facilitating driving some relatively large to-be-repelled subjects to crawl in a direction away from the protection area 13. On the other hand, some relatively large to-be-repelled subjects may simultaneously contact multiple third positive electrodes 413, that is, may simultaneously receive cumulate repelling currents from multiple electrical-stimulation barriers, thereby further stimulating the relatively large to-be-repelled subjects to crawl in a direction away from the protection area 13.

Because an intensity of the repelling current in this embodiment is relatively small, for example, the repelling current is approximately several hundred microamperes, a potential difference between two adjacent third positive electrodes 413 is also relatively small. In this embodiment, by respectively loading two slightly different voltages on two third positive electrodes 413, a relatively small potential difference is formed, thereby making a slight repelling current easier to generate.

Further optionally, referring to FIG. 13, the multiple fourth positive electrodes 423 may likewise be loaded with different voltages.

For example, an extending direction of the multiple fourth positive electrodes 423 is a radial direction of the annular third positive electrodes 413. Each fourth positive electrode 423 intersects multiple third positive electrodes 413 and is electrically insulated at their respective crossover points via a third insulating portion.

In this embodiment, for one group of fourth positive electrodes 423, an intensity of a repelling current corresponding to the electrical-stimulation barrier formed between two adjacent fourth positive electrodes 423 gradually increases. multiple groups of fourth positive electrodes 423 are sequentially arranged. For example, along a circumferential direction around the to-be-protected component 12, current distribution of the multiple groups of fourth positive electrodes 423 is V1, V2, V3, V4, V5, V1, V2, V3, V4, V5, V1, V2, V3, V4, V5, V1, V2, V3, V4, V5, ... V1, V2, V3, V4, V5, wherein V1, V2, V3, V4, and V5 form one group of fourth positive electrodes 423.

On one hand, as the to-be-repelled subject crawls closer to the protection area 13, required electrical stimulation gradually increases, thereby facilitating driving some relatively large to-be-repelled subjects to crawl in a direction away from the protection area 13. On the other hand, some relatively large to-be-repelled subjects may simultaneously contact multiple fourth positive electrodes 423, that is, may simultaneously receive repelling currents from multiple electrical-stimulation barriers, thereby further stimulating the relatively large to-be-repelled subjects to crawl in a direction away from the protection area 13.

Because an intensity of the repelling current in this embodiment is relatively small, for example, the repelling current is approximately several hundred microamperes, a potential difference between two adjacent fourth positive electrodes 423 is also relatively small. In this embodiment, by respectively loading two slightly different voltages on two fourth positive electrodes 423, a relatively small potential difference is formed, thereby making a slight repelling current easier to generate.

The above-formed grid-like protective network of the repelling device 40 can form electrode lines having potential differences in all directions, thereby effectively preventing to-be-repelled subjects coming from different directions from entering the protection area 13.

Further optionally, each fourth positive electrode 423 has a same voltage as one third positive electrode 413 and is electrically bonded to the third positive electrode 413 at an intersection therebetween.

For example, voltages of five third positive electrodes 413 are sequentially V1, V2, V3, V4, and V5; voltages of one group of fourth positive electrodes 423 are sequentially V1, V2, V3, V4, and V5. In this way, multiple fourth positive electrodes 423 having a same voltage may be electrically connected through one third positive electrode 413 and may form electrodes having a same voltage, and may be electrically connected to one positive-electrode output terminal of a power source through one electrical connection trace.

A surface of the first electrode 41 is flush with a surface of the charging dock 230 or protrudes from the surface of the charging dock 230, so as to facilitate sufficient contact between the first electrode 41 and the to-be-repelled subject.

A surface of the second electrode 42 is flush with the surface of the charging dock 230 or protrudes from the surface of the charging dock 230, so as to facilitate sufficient contact between the second electrode 42 and the to-be-repelled subject.

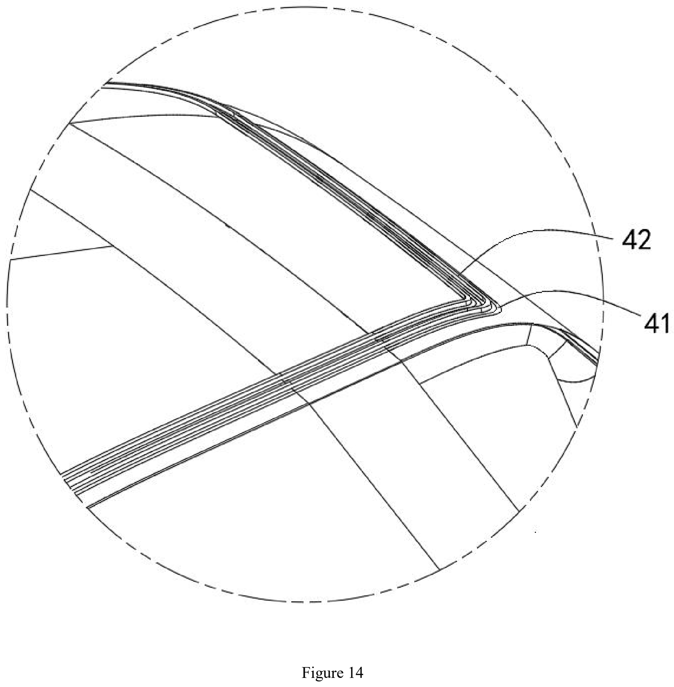

Further optionally, referring to FIG. 14, the second electrode 42 protrudes relative to the first electrode 41. Because a snail is a soft-bodied organism, the snail can simultaneously contact the first electrode 41 and the second electrode 42 when passing the first electrode 41 and the second electrode 42, thereby causing the first electrode 41 and the second electrode 42 to form a conductive circuit and generate a repelling current. The first electrode 41 and the second electrode 42 are arranged in a staggered height configuration, so that a user's finger will not simultaneously contact the first electrode 41 and the second electrode 42, thereby preventing the user from accidentally touching the first electrode 41 and the second electrode 42.

Further, the number of first electrodes 41 is a plurality, the number of second electrodes 42 is a plurality, and a distance between two adjacent second electrodes 42 is less than or equal to a first preset distance. The first preset distance is dimensioned to be smaller than a width of a pad of a user's little finger, so that a finger pad of the user will not simultaneously contact the first electrode 41 and the second electrode 42. For example, the first preset distance is 4 mm.

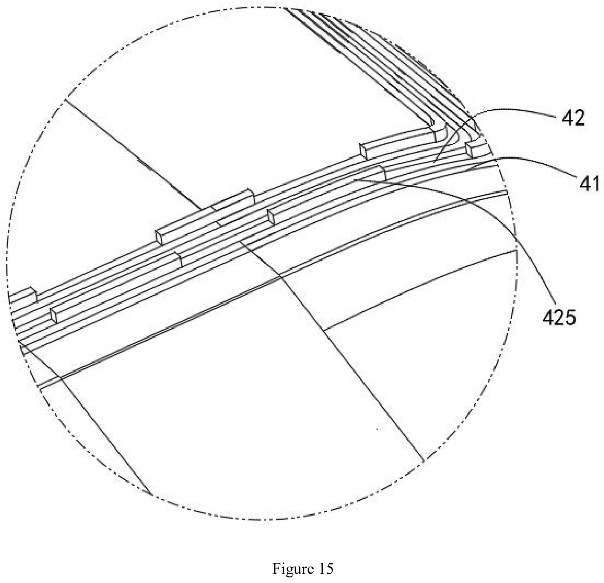

Optionally, referring to FIG. 15, the second electrode 42 is provided with multiple conductive portions 421 distributed at intervals. The multiple conductive portions 421 are respectively electrically connected to the second electrode 42 and protrude relative to the first electrode 41.

Because a snail is a soft-bodied organism, the snail can simultaneously contact the first electrode 41 and the second electrode 42 when passing the first electrode 41 and the second electrode 42, thereby causing the first electrode 41 and the second electrode 42 to form a conductive circuit and generate a repelling current. The first electrode 41 and the second electrode 42 are arranged in a staggered height configuration, so that a user's finger will not simultaneously contact the first electrode 41 and the second electrode 42, thereby preventing the user from accidentally touching the first electrode 41 and the second electrode 42.

A gap is formed between two adjacent conductive portions 421. When the second electrode 42 is annular and multiple second electrodes 42 are provided, providing the multiple protruding conductive portions 421 on the second electrode 42 can not only effectively prevent a user from accidentally touching the first electrode 41 and the second electrode 42 simultaneously, but can also facilitate water between two second electrodes 42 to flow out through the gaps, thereby preventing accumulated water from being deposited between two adjacent second electrodes 42 and causing problems such as a short circuit between the first electrode 41 and the second electrode 42. A width of the gap between two adjacent conductive portions 421 is less than a width of a pad of a little finger so as to prevent a finger from simultaneously contacting the first electrode 41 and the second electrode 42, or the conductive portions 421.

Further optionally, the conductive portions 421 of two adjacent second electrodes 42 are staggered or offset. For example, the conductive portions 421 of an inner second electrode 42 are aligned with gaps of an outer second electrode 42, and the conductive portions 421 of the outer second electrode 42 are aligned with gaps of the inner second electrode 42. The arrangement can further effectively prevent a user from accidentally touching the first electrode 41 and the second electrode 42 simultaneously, and can also facilitate water between two second electrodes 42 to flow out through gaps on both sides, thereby further preventing accumulated water from being deposited between two adjacent second electrodes 42 and causing problems such as a short circuit between the first electrode 41 and the second electrode 42.

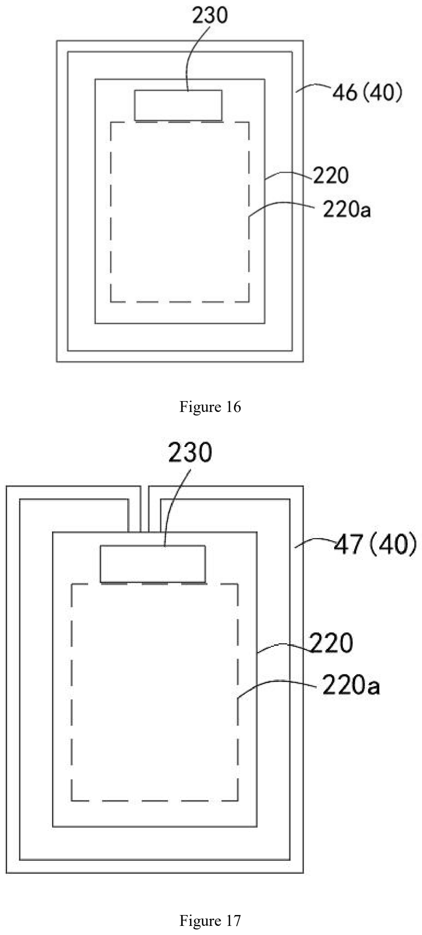

In a sixth optional embodiment of the repelling device 40, referring to FIG. 16, the repelling device 40 includes a galvanic cell electrode 46. In response to the to-be-repelled subject contacting the galvanic cell electrode 46, a repelling current is generated through a galvanic cell effect so as to apply electrical stimulation to the to-be-repelled subject.

The galvanic cell electrode 46 is an electrochemically active metal layer. The metal layer can undergo an electrochemical reaction with mucus secreted by a snail to form a galvanic-cell reaction. A current is generated during the galvanic-cell reaction. The current can be conducted to the body of the snail so as to produce slight electrical stimulation, causing the snail to feel discomfort and stop moving or change a moving direction.

A material of the galvanic cell electrode 46 includes, but is not limited to, active metals such as copper, zinc, magnesium, and aluminum.

For example, the galvanic cell electrode 46 is a copper layer or a copper sheet. The galvanic cell electrode 46 is disposed around the to-be-protected component 12. Optionally, the galvanic cell electrode 46 is in a closed annular shape or in multiple arc segments. Generally, a gap between adjacent arc segments is less than or equal to 5 mm, so as to prevent a snail from crawling into the to-be-protected area 13 through the gap between the adjacent arc segments. Of course, the galvanic cell electrode 46 may also be in a dot-matrix shape. A gap between dot-matrix portions is less than or equal to 5 mm, so as to prevent a snail from crawling into the to-be-protected area 13 through the gap between the dot-matrix portions.

It should be noted that mucus secreted by a snail contains moisture and a certain concentration of electrolytes, such as salts, calcium ions, and other minerals, and is electrically conductive. When a snail crawls onto a copper surface, the mucus acts as a conductive electrolyte medium, allowing the copper and the environment to form a functional electrochemical cell.

When the mucus of the snail contacts the copper surface, metal atoms in the copper release electrons and are oxidized into copper ions (Cu2+). This process can react with mucus in the snail to form a weak current. Specifically, the anodic reaction formula of the galvanic cell, in which copper is oxidized, is as follows:
$Cu - > Cu 2 + + 2 e -$

A cathode reaction formula of the galvanic cell is as follows:
$O 2 - + 4 H + + 4 e - - > 2 H 2 O$

These reactions form a closed circuit with assistance of the mucus, thereby causing a micro-current to be generated. The current exerts a stimulating effect on the body of the snail and may interfere with a nervous system or a metabolic process of the snail. In addition, generated copper ions (Cu2+) prompt the snail to avoid the copper surface.

The repelling device 40 provided in this embodiment does not need to be provided with a power source and is a passive repelling device 40, thereby saving energy consumption. Moreover, electrical control is unnecessary and no risk is caused to a user.

In a seventh optional embodiment of the repelling device 40, referring to FIG. 17, the repelling device 40 includes a conductive layer 47. Two ends of the conductive layer 47 are respectively electrically connected to a positive electrode and a negative electrode of a power source so as to apply electrical stimulation to the to-be-repelled subject in response to the to-be-repelled subject contacting the conductive layer 47.

Optionally, the conductive layer 47 is electrically connected into a conductive circuit, so that a slight repelling current exists on the conductive layer 47. The conductive layer 47 is substantially annular and surrounds a periphery of the to-be-protected component 12.

Specifically, the power source, a high-impedance load, and the conductive layer 47 form a conductive circuit. The conductive layer 47 is disposed on a surface of the charging dock 230 and is disposed around a periphery of the to-be-protected component 12 in a nearly annular shape. A resistance value of the load is relatively large, so that a relatively small repelling current is formed in the conductive circuit, such that the to-be-repelled subject stops moving or changes a moving direction in response to contacting the conductive layer 47, thereby preventing the to-be-repelled subject from entering the protection area 13 and further preventing the to-be-protected component 12 from being blocked by the to-be-repelled subject or affected by mucus secreted by the to-be-repelled subject, so that the self-moving device 100 has a good repelling function and self-protection function, thereby improving reliability of the self-moving device 100.

The following embodiments exemplify power sources of the repelling device 40.

In a first optional embodiment of a power source, the repelling device 40 further includes a dedicated first power source. A positive electrode of the first power source is electrically connected to the first electrode 41. A negative electrode of the first power source is electrically connected to the second electrode 42, so that the first electrode 41 and the second electrode 42 are electrically conducted through the to-be-repelled subject so as to generate a repelling current.

Further optionally, the first electrode 41 and the second electrode 42 are arranged at intervals or are electrically insulated, so as to form multiple annular electrodes, spiral electrodes, or grid-like electrodes.

In this embodiment, the repelling device 40 is independently provided with the first power source and does not need to share the power source of the charging device 200, thereby eliminating a need to convert the power source of the charging device 200 into a corresponding slight voltage so as to form a slight repelling current.

Further optionally, the first power source includes, but is not limited to, a solar cell. On one hand, provision of the solar cell allows solar energy to be used for charging, without a need to use the power source of the charging device 200. On the other hand, because the generated repelling current is minimal, a required battery capacity is also very small, and solar charging is sufficient to supply the generated repelling current.

In a second optional embodiment of a power source, the charging device 200 includes a second power source. A positive electrode of the second power source is electrically connected to the first electrode 41. A negative electrode of the second power source is electrically connected to the second electrode 42, so that the first electrode 41 and the second electrode 42 are electrically conducted through the to-be-repelled subject so as to generate a repelling current. Optionally, the second power source may be a battery of the charging device 200 and the like. In this embodiment, the repelling device 40 reuses a charging battery of the charging device 200, thereby eliminating a need to additionally provide a power source, saving cost, and reducing additional space required for additionally providing the power source.

Further optionally, the charging assembly 202 includes a positive output electrode plate and a negative output electrode plate. The positive output electrode plate and the negative output electrode plate are respectively electrically connected to a positive electrode and a negative electrode of the second power source of the charging device 200.

In one optional embodiment, the charging device 200 further includes a control switch and a high-resistance voltage-divider circuit. One end of the control switch is electrically connected to the positive output electrode plate, the other end of the control switch is electrically connected to one end of the high-resistance voltage-divider circuit, the other end of the high-resistance voltage-divider circuit is electrically connected to the first electrode 41, and the second electrode 42 is electrically connected to the negative output electrode plate. In this embodiment, series voltage division is performed by using the high-resistance voltage-divider circuit, so that a potential difference between the first electrode 41 and the second electrode 42 is relatively small, thereby forming the foregoing slight repelling current. Further, a constant current source may also be connected in series in the circuit provided in this embodiment so as to provide a repelling current having relatively high accuracy.

In another optional embodiment, the charging device 200 further includes a control switch and a multi-stage step-down circuit. One end of the control switch and the negative output electrode plate are respectively electrically connected to two input ends of the multi-stage voltage-divider circuit, one output end of the multi-stage voltage-divider circuit is electrically connected to the first electrode 41, and another output end of the multi-stage voltage-divider circuit is electrically connected to the second electrode 42. In this embodiment, a voltage provided by the second power source is first stepped down by using the multi-stage step-down circuit, so that an output voltage of the multi-stage step-down circuit is relatively small, thereby making a potential difference between the first electrode 41 and the second electrode 42 relatively small and further forming the foregoing slight repelling current. Further, a constant current source may also be connected in series in the circuit provided in this embodiment so as to provide a repelling current having relatively high accuracy.

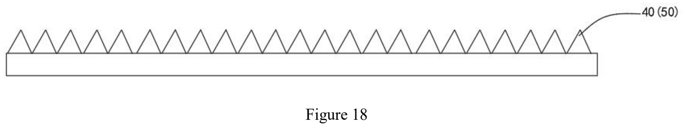

In an eighth optional embodiment of the repelling device 40, referring to FIG. 18, the repelling device 40 includes a spike structure 50. The spike structure 50 protrudes from at least part of a periphery of the chassis 220, or protrudes from at least part of a periphery of the to-be-protected component 12.

Optionally, a material of the spike structure 50 may be an insulating material. The spike structure 50 may be annular, dot-matrix, or the like and surround periphery of the to-be-protected component 12. The spike structure 50 can repel snails by a physical defense manner, thereby preventing the to-be-protected component 12 in the protection area 13 from being blocked by the snail or affected by mucus secreted by the snail.

Optionally, a material of the spike structure 50 may be a conductive material. When the spike structure 50 is made of a conductive material, the spike structure 50 may have a same structure as the galvanic cell electrode 46 in the sixth optional embodiment, namely multiple spike structures 50 are disposed on the galvanic cell electrode 46. In this embodiment, snails are repelled by using both electrical stimulation based on the galvanic cell effect and physical defense, thereby preventing the to-be-protected component 12 in the protection area 13 from being blocked by the snail or affected by mucus secreted by the snail.

This disclosure does not specifically limit a manner in which the repelling device 40 is disposed on the charging dock 230.

Optionally, the repelling device 40 may be coated or printed on the charging dock 230.

Optionally, the repelling device 40 may be attached to the charging dock 230 through an adhesive layer.

Optionally, the repelling device 40 may be removably connected to the charging dock 230. By detachably connecting the repelling device 40 to the charging dock 230, user or maintenance personnel can easily remove the repelling device 40 for cleaning, inspection, or replacement, thereby preventing overall use of the device from being affected by damage to the protective device and improving maintainability and service life of the device. Further specifically, the repelling device 40 may be removably connected to the charging dock 230 via magnetic attraction.

Further optionally, an accommodating groove is provided on a surface of the charging dock 230. The accommodating groove is substantially annular. The accommodating groove 102 provides a precise installation position for the repelling device 40, so that the repelling device 40 is not prone to displacement or loosening after being fitted, thereby ensuring a more stable connection between the repelling device 40 and the charging dock 230 and reducing a risk of displacement caused by vibration or external force. The repelling device 40 is partially or entirely embedded in the accommodating groove, so that the repelling device 40 is flush with the surface of the charging dock 230 or forms a smooth transition therewith, thereby improving integrity and aesthetics of the appearance of the device and avoiding abrupt protrusions or gaps. A side wall of the accommodating groove can limit and protect the repelling device 40, reduce a possibility that external impact or foreign matter directly acts on an edge of the repelling device 40, and lower a possibility of deformation or damage of the repelling device 40, thereby improving durability of the protective device. By partially embedding the repelling device 40 in the accommodating groove, an overall thickness or volume of the device can be reduced, thereby achieving a more compact structural design. The repelling device 40 includes a mounting portion. The mounting portion is embedded in the accommodating groove and at least partially projects from the surface of the charging dock 230.

The mounting portion includes, but is not limited to, an insulating plate. The repelling device 40 is made of a conductive material, for example, the first electrode 41 and the second electrode 42, a conductive trace 48, or the galvanic cell electrode 46. The repelling device 40 is disposed on the insulating plate and is installed in the accommodating groove through the insulating plate.

In this embodiment, installation of the repelling device 40 is facilitated by providing the accommodating groove.

In other embodiments, an accommodating groove may alternatively be omitted from the surface of the charging dock 230.

Optionally, the charging device 200 further includes a controller.

In one optional embodiment, the to-be-protected component 12 includes a humidity sensor. The humidity sensor is electrically connected to the controller. The controller is configured to control the repelling device 40 to be electrically connected to a power source in response to the humidity sensor detecting that humidity is greater than or equal to a humidity threshold.

Specifically, because snails generally appear on rainy days, a humidity sensor is disposed on the lawn mower, and the humidity sensor is used to detect humidity of an environment or a surface of the lawn mower. Based on a humidity detection result, the repelling device 40 is controlled to be electrically conducted with the power source so as to repel snails.

Optionally, the humidity threshold is not specifically limited. The humidity threshold includes, but is not limited to, 70%, 75%, or 80%.

In this embodiment, based on humidity detected by the humidity sensor, when the humidity is greater than the humidity threshold, the controller controls the power source to supply power to the repelling device 40, so that the repelling device 40 generates a repelling current and actives a repelling mode. Compared with always turning on the repelling mode of the repelling device 40, power can be saved, and the biological characteristics of snails can be used to perform targeted snail repelling, thereby improving working efficiency of the repelling device 40.

In another optional embodiment, the controller is configured to control the repelling device 40 to be electrically connected to a power source while the charging device 200 charges the self-moving device 100.

Generally, when the self-moving device 100 is in a charging state, the self-moving device 100 is in a stationary state. At this time, snails and other to-be-repelled subjects can easily crawl onto the self-moving device 100. Based on this, the controller controls the repelling device 40 to be electrically conducted with the power source while the self-moving device 100 is in the charging state, thereby starting the repelling mode. Compared with always turning on the repelling mode of the repelling device 40, power can be saved and working efficiency of the repelling device 40 can be improved.

This disclosure provides a charging device 200. The repelling device 40 is disposed on an outer periphery of the chassis 220 of the charging device 200, or the repelling device 40 is disposed on the charging dock 230 of the charging device 200, for example, the repelling device 40 is disposed around a charging electrode plate of the charging dock 230 or around the infrared module 201 of the charging dock 230. The arrangement can not only prevent snails from crawling to the charging dock 230, but can also prevent snails from crawling to a surface of the self-moving device 100, namely a lawn mower, parked in the parking area 220a.

Further, current-generation manners of the repelling device 40 include, but are not limited to, the following embodiments. In a first current-generation manner, the repelling device 40 includes a positive electrode and a negative electrode, and a snail conducts the positive electrode and the negative electrode after crawling into contact therewith so as to generate a repelling current. In a second current-generation manner, the repelling device 40 includes the conductive layer 47, and the conductive layer 47 itself is electrified. When a snail crawls to a surface of the conductive layer 47, the snail and the conductive layer 47 form a parallel circuit, thereby generating a repelling current. In a third current-generation manner, the repelling device 40 includes a copper layer or a copper sheet. After the snail contacts the copper sheet, the snail can form a galvanic cell effect with the copper sheet through mucus generated by the snail, thereby generating a repelling current. In addition, the copper sheet generates copper ions that stimulate the snail.

Further, structural forms of the repelling device 40 include, but are not limited to, the following embodiments. A first structure is annular strip electrodes, comprising a first annular strip electrode, namely the foregoing first electrode 41, and a second annular strip electrode, namely the foregoing second electrode 42, wherein the first annular strip electrode and the second annular strip electrode are respectively connected to positive and negative electrodes of a power source. A second structure is grid-like electrodes, wherein intersections of the grid-like electrodes are insulated, and the grid-like electrodes can increase a probability that a snail contacts the positive electrode and the negative electrode.

Further, the first annular strip electrode and the second annular strip electrode are arranged in a staggered height configuration so as to prevent a user from simultaneously touching both polarities.

Further, the repelling device 40 includes multiple annular strip electrodes, namely positive electrodes, arranged at intervals. Each annular strip electrode has a different voltage, so that currents having different intensities are generated between two positive electrode lines. For example, the repelling device 40 includes a first annular strip electrode, a second annular strip electrode, and a third strip electrode. The first annular strip electrode is connected to a 1 V power source, the second annular strip electrode is connected to a 3 V power source, and the third strip electrode is connected to a 7 V power source. In response to a snail conducting the first annular strip electrode and the second annular strip electrode, a voltage difference between the two electrodes is 2 V. When the snail continues crawling, the snail will conduct the second annular strip electrode and the third strip electrode, and a voltage difference between the two electrodes is 4 V. That is, the voltage difference increases progressively, so that current stimulation received by the snail gradually increases. Alternatively, when a snail has a relatively large body size and crawls onto a surface of the machine, the snail may directly conduct the first annular strip electrode and the third strip electrode.

Further, the repelling device 40 may repel snails by electrical shock, and may also repel snails by physical defense such as a thorn mesh structure or spikes.

Although embodiments of this disclosure have been illustrated and described above, it is to be understood that the above embodiments are exemplary and cannot be construed as limiting this disclosure. Within the scope of this disclosure, persons of ordinary skill in the art may make changes, modifications, substitutions, and variations to the above embodiments, and such improvements and modifications shall also fall within the protection scope of this disclosure.

## Claims

1. A charging device (200), comprising:
a chassis (220) comprising a parking area (220a) for parking a self-moving device (100);
a charging dock (230) disposed on the chassis (220), the charging dock (230) comprising at least one to-be-protected component (12); and
a repelling device (40) surrounding at least part of a periphery of the chassis (220), or surrounding at least part of a periphery of the at least one to-be-protected component(12), so as to form a protection area (13) at the periphery of the chassis (220) or the periphery of the at least one to-be-protected component (12), such that a to-be-repelled subject changes a moving direction or stops moving in response to contacting the repelling device (40).

2. The charging device (200) according to claim 1, wherein the repelling device (40) is disposed on the chassis (220), or on at least a portion of an outer periphery of the chassis (220), or on the charging dock (230).

3. The charging device (200) according to claim 1 or 2, wherein the at least one to-be-protected component (12) comprises a sensor module (123), and the repelling device (40) surrounds at least part of a periphery of the sensor module (123), preferably, the sensor module (123) is located on a side of the charging dock (230) facing the parking area (220a).

4. The charging device (200) according to any of claims 1 to 3, wherein the at least one to-be-protected component (12) comprises a charging assembly (202), and the repelling device (40) surrounds at least part of a periphery of the charging assembly (202), preferably, the charging assembly (202) is located on a side of the charging dock (230) facing the parking area (220a).

5. The charging device (200) according to any of claims 1 to 4, wherein the repelling device (40) is configured to generate a repelling current to repel the to-be-repelled subject.

6. The charging device (200) according to claim 5, wherein
the repelling device (40) comprises first electrodes (41) and second electrodes (42), wherein, when the to-be-repelled subject simultaneously contacts the first electrodes (41) and the second electrodes (42), a conductive circuit is formed between the first electrodes (41) and the second electrodes (42) and a repelling current is generated.

7. The charging device (200) according to claim 6, wherein
there are multiple first electrodes (41) and multiple second electrodes (42), and the multiple first electrodes (41) and the multiple second electrodes (42) are alternately spaced apart, wherein the multiple first electrodes (41) are electrically connected to a positive electrode of a power source, and the multiple second electrodes (42) are electrically connected to a negative electrode of the power source.

8. The charging device (200) according to claim 6, wherein
the first electrodes (41) and the second electrodes (42) are respectively electrically connected to two positive voltage electrode output terminals of a power source, and a potential difference exists between the two positive voltage electrode output terminals,
optionally, the repelling device (40) further comprises multiple third electrodes (45), the multiple third electrodes (45) being disposed between the first electrodes (41) and the second electrodes (42), the first electrodes (41) being disposed on a side away from the protection area (13), and the second electrodes (42) being disposed on a side close to the protection area (13).

9. The charging device (200) according to claim 6, wherein
the first electrodes (41) and the second electrodes (42) are an annular electrode; or
the first electrodes (41) and the second electrodes (42) are a planar spiral electrode.

10. The charging device (200) according to claim 6, wherein
there are multiple first electrodes (41) and multiple second electrodes (42), the multiple first electrodes (41) and the multiple second electrodes (42) intersecting one another in a crisscross manner, the multiple first electrodes (41) being sequentially arranged at intervals, and the multiple second electrodes (42) being sequentially arranged at intervals.

11. The charging device (200) according to claim 10, wherein
the multiple first electrodes (41) comprise first positive electrodes (411) and first negative electrodes (412) arranged alternately, the multiple second electrodes (42) comprise second positive electrodes (421) and second negative electrodes (422) arranged alternately, the first positive electrodes (411) and the second negative electrodes (422) being electrically isolated at intersections thereof, and the first negative electrodes (412) and the second positive electrodes (421) being electrically isolated at intersections thereof, wherein the first positive electrodes (411) and the second positive electrodes (421) are electrically connected at intersections thereof, and the first negative electrodes (412) and the second negative electrodes (422) are electrically connected at intersections thereof.

12. The charging device (200) according to claim 6, wherein
the second electrodes (42) protrude relative to the first electrodes (41), and/or
the second electrodes (42) are provided with multiple conductive portions distributed at intervals, the multiple conductive portions being electrically connected to the second electrodes (42) respectively and protruding relative to the first electrodes (41).

13. The charging device (200) according to any of claims 5 to 12, wherein
the repelling device (40) comprises a conductive layer (47), opposite ends of the conductive layer (47) being electrically connected to a positive electrode and a negative electrode of a power source, respectively, so as to apply electrical stimulation to the to-be-repelled subject in response to the to-be-repelled subject contacting the conductive layer (47).

14. The charging device (200) according to any of claims 5 to 13, wherein
the repelling device (40) comprises a galvanic cell electrode, and in response to the to-be-repelled subject contacting the galvanic cell electrode, a current is generated by a galvanic cell effect to apply electrical stimulation to the to-be-repelled subject.

15. The charging device (200) according to any of claims 5 to 14, wherein, the charging device (200) further comprising a controller and a humidity sensor, the humidity sensor being electrically connected to the controller; the controller being configured to control the repelling device (40) to be electrically connected to a power source at least in response to the humidity sensor detecting that humidity is greater than or equal to a humidity threshold; or
the controller being configured to control the repelling device (40) to be electrically connected to the power source while the charging device (200) charges the self-moving device (100).
